# EUROPÄISCHE PATENTSCHRIFT

(11) **EP 1 229 621 B1**
(45) Veröffentlichungstag und Bekanntmachung des Hinweises auf die Patenterteilung: **05.10.2011**
(21) Anmeldenummer: 02001661.4
(22) Anmeldetag: 24.01.2002
(51) Int. Cl.: H02G 1/12

(54) **Abmantelungszange für Kabel**
Cable stripping pliers
Pince à dénuder pour câbles

(30) Priorität: 02.02.2001 IT BZ010004
(43) Veröffentlichungstag der Anmeldung: 07.08.2002
(73) Patentinhaber: INTERCABLE SRL, I-39031 Brunico (Bolzano) (IT)
(72) Erfinder: Mutschlechner, Klaus, 39031 Brunico (Bolzano) (IT)
(74) Vertreter: Oberosler, Ludwig

(56) Entgegenhaltungen:
- FR-A- 1 350 818
- US-A- 2 647 309

## Beschreibung

Die Erfindung bezieht sich auf eine Zange zum Abziehen des Außenmantels von Elektrokabeln oder dergleichen. Es sind zangenförmige Abmantelungswerkzeuge insbesondere aus der FR-1.350.818 (Bourdier), aus der FR-87 06391 (Roux) und aus der FR-8814052 (Pinchon) bekannt. Alle diese Werkzeuge bestehen wesentlich aus zwei metallischen Teilen welche unter sich gelenkig verbunden sind um an einer Seite des Gelenkes zwei Griffe für die Betätigung von zwei Backen zu haben welche sich an der gegenüberliegenden Seite des Gelenkes erstrecken.

Seitlich an einer der Backen dieses Zangenwerkzeuges (FR-1.350.818) sind Auflagerollen und Führungsrollen mittels Lagerzapfen angebracht deren Achsen parallel zur Achse des Zangengelenkes verlaufen, während an der zweiten Backe zwei Kreisklingen gelagert sind deren Drehachsen parallel zu jenen der Führungsrollen und zur Achse des Zangengelenkes verlaufen. Dieses Werkzeug ermöglicht die Ausführung von Längsschnitten an der Ummantelung von Kabeln welche auf besagte Führungsrollen aufliegen, indem durch Druck auf die Griffteile der Zange die Kreisklingen in die Ummantelung eingedrückt werden und anschließend die Zange dem Kabel entlang gezogen wird. Die Schließstellung der Backen mit eingedrückten Klingen kann mittels eigener Vorrichtung, welche im Bereich des Zangengelenkes vorgesehen ist, arretiert werden. Dieses Werkzeug ermöglicht nur die Ausführung von Längsschnitten.

Das in der FR-87 06391 beschriebene Werkzeug ist an beiden Backen mit Kreisklingen versehen deren Drehachsen alle parallel zur Achse des Zangengelenkes verlaufen. Diese Kreisklingen sind seitlich an den Backen gelagert und ermöglichen ausschließlich einen Schnitt entlang einer Umfangslinie an der Kabelummantelung. Dieses Werkzeug ist an beiden freien Backenenden mit fest montierten, gegeneinander gerichteten Klingen ausgestattet welche geeignet sind etwas nach Art einer Zange zu ergreifen, festzuhalten und durchzutrennen.

Das in der FR-8814052 beschriebene Werkzeug ermöglicht die Ausführung eines Längsschnittes und eines Schnittes entlang einer Umfangslinie. Die Backen dieses Werkzeuges sind an einer Seite mit Auflagerollen und mit freitragend gelagerten Kreisklingen ausgestattet, während an der Gegenseite freitragend gelagerte Kreisklingen vorgesehen sind welche für den Schnitt längs einer Umfangslinie des Kabelmantels geeignet sind.

Insbesondere dieses letztgenannte Werkzeug weist für die Durchführung der Schnitte verschiedene Nachteile auf. Wahrend der Ausführung des Längsschnittes muss die Bedienungsperson durchgehend die Griffteile zusammendrücken um die erforderliche Schnitttiefe beizubehalten und gleichzeitig das Werkzeug an den Griffteilen parallel zur Kabelachse weiterzuziehen. Die gleichzeitige Ausführung dieser zwei Arbeitsgänge erweist sich als anstrengend und, nachdem die Wirkungslinie der am Werkzeug angewandten Zugkraft in Bezug auf die Wirkungslinie der Kreisklingen und der Auflage- und Führungsrollen zueinander versetzt sind, ist ein beachtenswerter Kraftaufwand und Erfahrung nötig.

Das Werkzeug selbst ist zudem sperrig und schwer und da durch die freitragende Lagerung der Klingen und Rollen welche von der die Backen der Zange enthaltenden Ebene ziemlich beabstandet sind ergeben sich, während der Durchführung der Schnitte, Drehmomente an den Backen und am Zangengelenk. Auch die Vorrichtung für die Einstellung der Schnitttiefe sind an diesem bekannten Werkzeug sperrig und schwer.

Die Erfindung stellt sich die Aufgabe eine Abmantelungszange der oben genannten Art für Kabel zwecks Ausführung von Längsschnitten und von Schnitten entlang einer Umfangslinie zu schaffen welche leicht, sicher und ohne übermäßigem Kraftaufwand zu handhaben ist, welche in Ihrem Aufbau kompakt und handlich ist und für eine vollständige elektrische Abisolierung geeignet ist.

Diese Aufgabe wird erfindungsgemäß dadurch gelöst, dass die Zange mit einem Vorschubmechanismus ausgestattet wird welcher geeignet ist die Vorschubbewegung für den Längsschnitt so auszuführen, dass die Bedienungsperson an den Griffen nur mit einer Hand ausschließlich die Kraft für das Eindrücken der Kreisklingen und das Beibehalten der Schnitttiefe aufbringen muss, während er mit der anderen Hand den Vorschubmechanismus betätigen kann welcher einen sehr verminderten Kraftaufwand erfordert. Der erfindungsgemäße Vorschubmechanismus wirkt auf ein Vorschubelemente welches eine Rolle ist welche aus zwei mit den kleineren Grundfläche zueinandergerichteten, an der Mantelfläche gezahnten, Konusstumpfen besteht und in einer Ebene wirkt in welcher die Kabelachse und die Kreisklinge liegt, wodurch die Kraftkomponenten welche dazu neigen während der Schnittausführung eine seitliche Abweichung zu bewirken, eliminiert werden.

Der Antrieb dieses erfindungsgemäßen Vorschubelementes erfolgt mittels Hebel oder Ratschenschlüssel. Um das Werkzeug hantlicher und leichter zu gestalten können das Vorschubelement welches aus einer, aus zwei mit den kleineren Grundflächen zueinandergerichteten verzahnten Kegelstumpfen gebildeten, Rolle besteht und die entsprechende Kreisklinge an zueinander parallelen Lagerzapfen gelagert sein welche jedoch mit der, die Zangenbacken und die Zangenlängsachse, enthaltenden Ebene einen leicht stumpfen Winkel bildet, auf diese Weise wird erreicht, dass während des Längsschnittes die Griffe, in Bezug zur Kabelachse, angewinkelt sind. Diese Anordnung ermöglicht es das Vorschubelement und die entsprechende Klinge oder entsprechenden Klingen freitragend aber weniger vorstehend zu lagern wodurch die daran wirkenden Kräfte ein kleineres Verformungsmoment an den Backen und am Zangengelenk bewirken was eine leichtere und kompaktere Bauart ermöglicht, wobei gleichzeitig für die Hand welche die Griffe betätigt Bewegungsfreiheit gegeben ist und sich der Vorteil ergibt, dass zumindest für den vorderen Bereich der Zange weniger Freiraum um den zu bearbeitenden Kabel herum benötigt wird.

Um eventuell auch den Kraftaufwand für die Beibehaltung der Schnitttiefe während der Ausführung des Längsschnittes zu eliminieren kann erfindungsgemäß ein Arretier/Entriegelungs-Mechanismus vorgesehen sein welcher am Zangengelenk zwischen den beiden Backen wirkt und mittels eigenem Griff oder an den Zangengriffen selbst betätigt werden kann. Die Erfindung schließt weiters nicht aus, dass dieser Arretiermechanismus auf die beiden Zangenbacken wirkt.

Für die Bestimmung der Schnitttiefe schlägt die Erfindung Kreisklingen vor welche mit mittigen Hülsen ausgestattet sind an welchen Abstandsringe aufsteckbar sind deren Innendurchmesser immer dem Außendurchmesser der besagten Hülsen entspricht während der Außendurchmesser in Bezug auf die gewünschte Eindringtiefe der Kreisklinge variiert.

Gemäß einer weiteren erfindungsgemäßen Ausführungsart können zwischen einem Kreisklingenpaar oder auch an einzelnen Kreisklingen ausgeformte Auflagen vorgesehen sein welche, in Bezug auf die Achse des in Bearbeitung stehenden Kabels, verstellbar sind um die Eindringtiefe der Klingen stufenlos variieren zu können. Zwischen den mittigen Hülsen der Kreisklingen und den entsprechenden Lagerzapfen können erfindungsgemäß Hülsen aus elektrisch isolierendem Werkstoff eingesetzt sein um eine elektrische Trennung zwischen den Klingen und den Zangenbacken herzustellen. Um für die Bedienungsperson hohe Sicherheit zu garantieren sind die einzelnen Kreisklingen und auch das Vorschubelement mit Schutzschalen abgedeckt welche nur den Eingriffbereich, bzw. den Schnittbereich, frei lassen.

Um den Austausch der Ringe welche die Schnitttiefe bestimmen vorzunehmen, genügt es erfindungsgemäß eine Schraube welche stirnseitig koaxial am Lagerzapfen für die Kreisklinge vorgesehen ist herauszuschrauben, die Schutzschale zusammen mit der Kreisklinge und den seitlichen Abstandsringen vom Lagerzapfen abzuziehen, die besagten Abstandsringe von der Hülse der Kreisklinge abzuziehen, die Distanzringe welche der Stärke des zu schneidenden Kabelmantels entsprechen aufzustecken und die vorher beschriebenen Arbeitsgänge in umgekehrter Reihenfolge auszuführen um die Kreisklinge samt Schutzschale wieder am entsprechenden Lagerzapfen zu befestigen.

Um einen stabilen aber leichten Aufbau der Zangenbacken zusammen mit der vollständigen elektrischen Abisolierung des Werkzeuges zu erreichen, schlägt die Erfindung eine Konstruktion aus zwei Platten vor, wobei die zwei Metallplatten zueinander beabstandet und gegenseitig verankert sind und von elektrisch isolierendem Kunststoff umhüllt sind welcher auch den Raum zwischen den Platten und die Erleichterungs-Ausnehmungen an diesen ausfüllt. Vorzugsweise ist das Zangengelenk zwischen den beiden Zangenschenkeln so konzipiert, dass der Lagerzapfen nicht als elektrische Verbindung zwischen den beiden Schenkeln wirkt und dass dieser mit elektrisch isolierendem Werkstoff umhüllt ist.

Gemäß einer Weiterentwicklung des Erfindungsgedankens, kann das Geenk zwischen den Zangenschenkeln mit einem Arretier-Mechanismus versehen sein welcher geeignet ist die Eingriffposition der Backen und somit die Eindringposition der Klingen während der Ausführung des Längs- und/oder des Rundschnittes zu blockieren. Dieser Arretiermechanismus kann bekannter Art sein und über einen Griff betätigt werden welcher in Arretierposition eine Stellung einnimmt welche der Stellung eines der Zangengriffe entspricht. An Stelle dieses Arretiermechanismus kann auch ein bekannter Sperrmechanismus vorgesehen sein welcher auf die Zangenbacken wirkt.

Die Erfindung wird anhand eines vorzuziehenden Ausführungsbeispieles einer erfindungsgemäßen, in den beigelegten Zeichnungen dargestellten, Abmantelungszange für Kabel näher erklärt, dabei erfüllen die Zeichnungen rein erklärenden und nicht begrenzenden Zweck.

Fig. 1 zeigt in perspektivischer Darstellung eine erfindungsgemäße Abmantelungszange für Kabel, in vollständig isolierter Ausführung in Schnittposition während der Ausführung eines Rundschnittes an einem strichliert dargestelltem Elektrokabel.

Fig. 2 zeigt in perspektivischer Darstellung die in Fig. 1 gezeigte Abmantelungszange während der Ausführung eines Längsschnittes an einem strichliert dargestelltem Elektrokabel, der Ratschenhebel für den Antrieb des Vorschubelementes ist in abgenommener Position dargestellt.

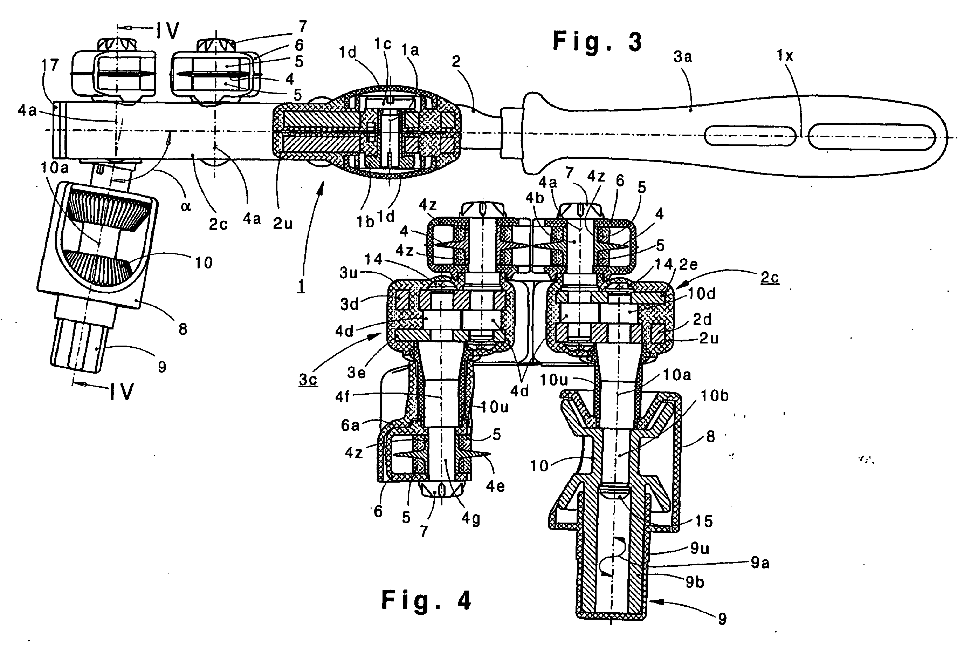

Fig. 3 zeigt eine Draufsicht auf die in den Fig. 1 und 2 gezeigten Abmantelungszange ohne oberem Griffteil und mit dem Gelenk zwischen den Zangenbacken in Schnittdarstellung; die Kreisklinge für den Längsschnitt zusammen mit ihrer Schutzschale und ihrem Lagerbolzen sind nicht dargestellt weil diese die Vorschubrolle mit den, mit den kleineren Grundflächen zueinandergerichteten gezahnten Kegelstumpfen, verdecken würden.

Fig. 4 zeigt einen Querschnitt gemäß der in Fig. 3 gezeigten Schnittebene IV-IV welche die Achse der Vorschubrolle mit den gezahnten Kegelstumpfen und die Achse der beiden Kreisklingen für den Rundschnitt beinhaltet, dabei sind die Zangenbacken in der extremen Schließstellung.

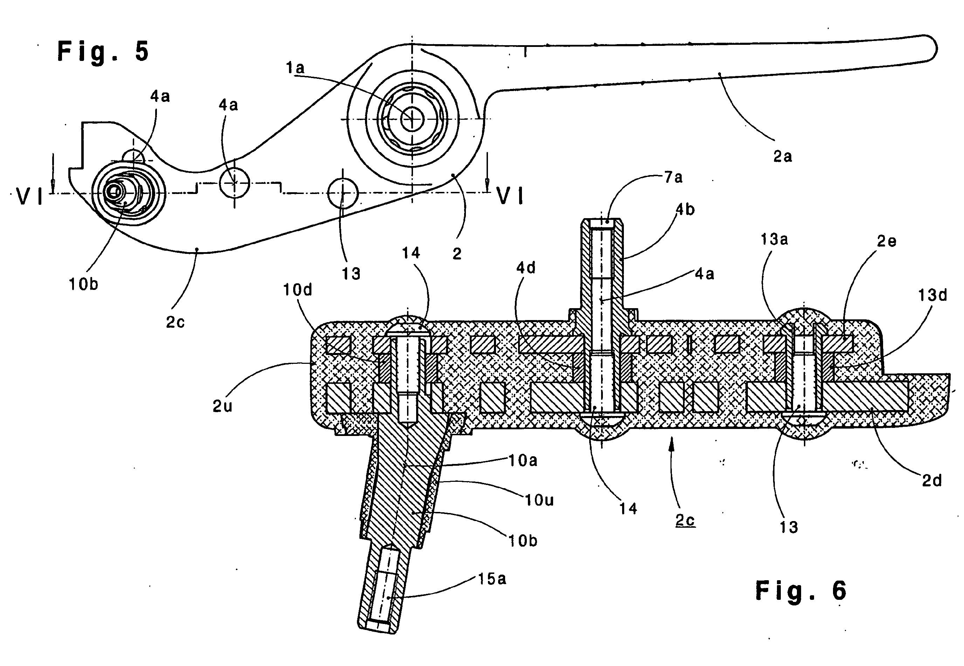

Fig. 5 zeigt in Seitenansicht einen Schenkel der in den Fig. 1 und 2 gezeigten Abmantelungszange samt Lagerzapfen für das Vorschubelement mit den gezahnten Konusstumpfen ohne Isolation und Griffstück.

Die Fig. 6 zeigt den Längsschnitt gemäß der in Fig. 5 gezeigten Schnittebene VI-VI welche die Achse des Lagerzapfens für das Vorschubelement mit den beiden gezahnten Konusstumpfen, die Achse des Lagerbolzens einer der Kreisklingen für den Rundschnitt und die Achse einer Schraube für die Verbindung und die Beabstandung der beiden die Zangenbacke bildenden Metallteile, beinhaltet; der Querschnitt zeigt außerdem die Isolierschicht welche die Zangenbacke umhüllt.

Die Abmantelungszange für Kabel 1 besteht im Wesentlichen aus zwei Schenkel 2, 3 welche gelenkig 1a verbunden sind und einseitig in zwei Griffen 2a, 3a, anderseitig in zwei Backen 2c, 3c enden. Die Backen 2c, 3c weisen freitragend seitlich abstehende Lagerbolzen auf an welchen Kreisklingen 4, 4e, bzw. eine Vorschubrolle 10 mit zwei gezahnten Kegelstumpfen, drehbar gelagert sind.

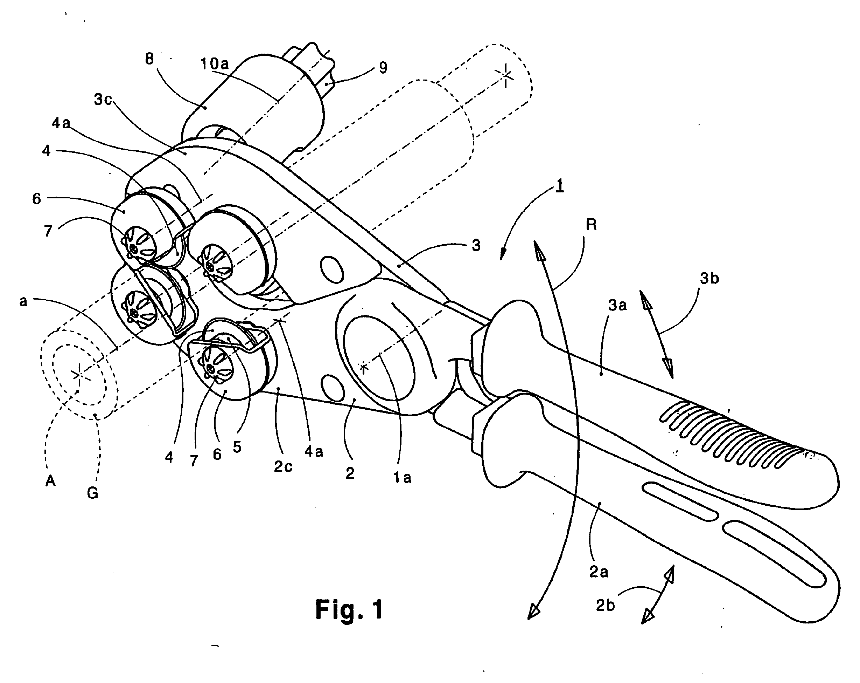

Die Kreisklingen 4 welche für den Rundschnitt (Fig. 1) am Mantel G welcher den Kern A eines Elektrokabels umhüllt verwendet werden, sind alle auf der selben Seite der beiden Backen 2c, 3c angeordnet und liegen in einer einzigen Ebene welche sich parallel zur Seitenfläche der Backen erstreckt, weiters sind sie möglichst nahe an der Seitenfläche der entsprechenden Backen 2c, 3c gelagert wobei die Achsen parallel zur Achse 1a des Zangengelenkes angeordnet sind. Dieser Schnitt wird ausgeführt indem zuerst die Klingen 4 um eine Tiefe welche der Stärke des Kabelmantels entspricht eingedrückt werden indem auf die Griffteile 2a, 3a Druck 2b, 3b ausgeübt wird und eventuell die Zange 1 abwechselnd in beide Richtungen jeweils für einen kleinen Winkel um die Achse a des Kabels bewegt R wird. Anschließend, sobald die Eindringtiefe der Klingen 4 erreicht ist, kann die Drehung R der Zange um den Kabel herum erfolgen indem Bewegungen von ca. 90° - 180° mit abwechselnden Richtungsänderungen ausgeführt werden bis der Kabelmantel durchtrennt ist.

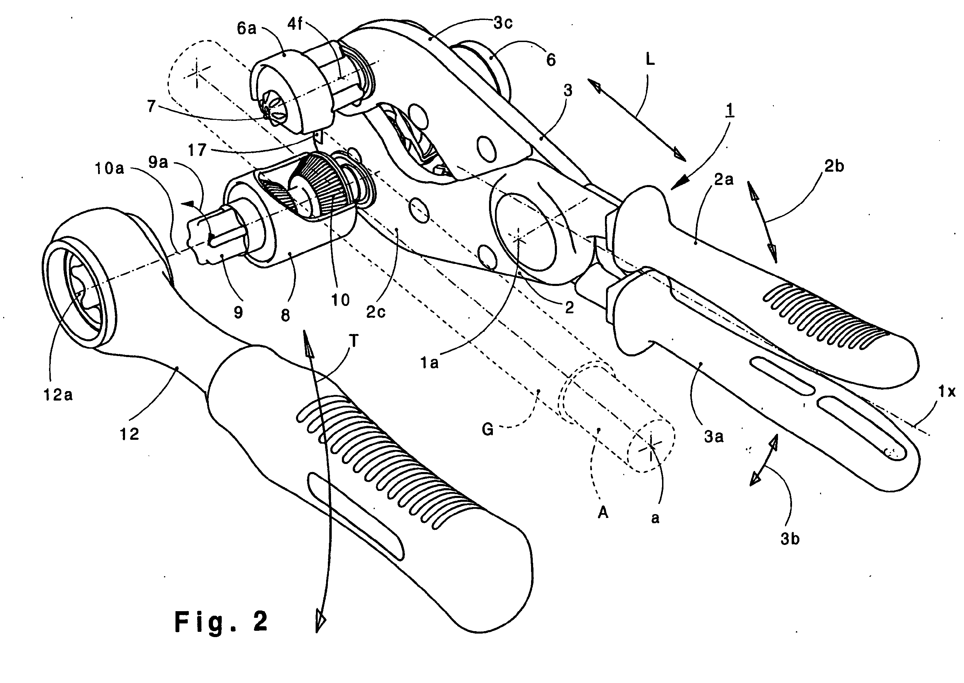

Für die Durchführung des Längsschnittes am Kabelmantels G (Fig. 2) wird der Kabel zwischen der Vorschubrolle 10 und mindestens einer entsprechenden Kreisklinge 4e geklemmt. Durch Druck 2b, 3b auf die beiden Griffteile 2a, 3a dringt die Kreisklinge 4e in den Kabelmantel G ein bis dieser an den Ringen 5 welche die Eindringtiefe bestimmen anliegt. Anschließend wird der Ratschenhebel 12 mit dem ausgeformten Ringteil 12a auf den entsprechend ausgeformten Zapfen 9 der Vorschubrolle 10 aufgesetzt um diese in die gewünschte Richtung zu drehen 9a, indem der Hebel abwechselnd geschwenkt T wird wodurch die Zange 1 in Längsrichtung L, der Kabelachse a entlang, verschoben wird. Während dieser Vorschubbewegung werden die Griffteile 2a, 3a so festgehalten oder in dieser Position arretiert damit die Klinge 4e ihrer Eindringposition beibehält. Natürlich kann der Ratschenmechanismus mit Umschaltung der Antriebsrichtung auch zwischen der Vorschubrolle 10 und dem entsprechenden Antriebszappfen 9 vorgesehen sein, in diesem Fall kann der Ratschenhebel 12 von einem einfachen Antriebshebel, einer Kurbel oder einem anderen bekannten Antriebselement ersetzt werden.

Um ein einwandfreies Drehen der Kreisklingen 4, 4e an den entsprechenden Lagerzapfen 4b, 4g und Stabilität während der Vorschubbewegung zwecks Ausführung des Schnittes zu garantieren und um das Austauschen der Ringe 5 welche die Schnitttiefe der Klingen bestimmen zu erleichtern, sieht ein Ausführungsbeispiel der Erfindung vor, dass die Kreisklingen 4, 4e im mittleren Bereich einer Hülse 4z radial vorstehen. Die Hülse 4z kann fest mit der Klinge 4, 4e verbunden sein oder einstückig mit dieser ausgeformt sein; An den Teilstücken der Hülse 4z, welche an beiden Seiten der Klinge 4, 4e vorstehen, sind die Ringe 5 austauschbar aufgesteckt. Der Austausch dieser Ringe 5 zwecks Veränderung der Eindringtiefe der Klingen 4, 4e in Bezug auf die Stärke des Kabelmantels G, erfordert also das Lösen der Schrauben 7 von den Enden der Lagerzapfen 4b, 4g, das axiale Abziehen der Schutzschale 6 zusammen mit der Klinge 4, 4e, das Herausnehmen dieser aus der Schutzschale 6, das Austauschen der Ringe 5 und die Neumontage der Teile in umgekehrter Folge.

Um die Zange 1 kompakter zu gestalten, sieht ein Ausführungsbeispiel der Erfindung vor, dass der Lagerzapfen für die Vorschubrolle 10 und der Lagerzapfen 4g für die Kreisklinge 4 mit ihren Achsen seitlich an den entsprechenden Backen 2c, 3c nicht senkrecht sondern, in Bezug auf eine Ebene welche die Längsachse 1x und beide Schenkel der Zange 1 beinhaltet, angewinkelt α sind um so zu erreichen, dass die Lagerzapfen 10b, 4g möglichst wenig vorstehen und gleichzeitig die erforderliche Handfreiheit an den Griffen 2a, 3a gegeben ist.

Für die Schaffung der Backen 2c, 3c sieht ein Ausführungsbeispiel der Erfindung eine Plattenstruktur vor in welcher die metallischen, durch Ausnehmungen erleichterten, Platten 2d, 2e; 3d, 3e zueinander beabstandet, untereinander verankert sind, diese Struktur ermöglicht es weiters, dass die Zwischenräume mit der selben Isoliermasse ausgefüllt werden mit welcher die Schenkel 2, 3 der Zange 1 umhüllt sind. Die Verankerung unter den Metallplatten 2d, 2e,; 3d, 3e erfolgt über Schraubelemente 13, 13a und Abstandsringe 13d und mittels der Enden der Lagerzapfen 10b, 4g, 4b an welchen die Schrauben 14 eingeschraubt sind und an welchen die entsprechenden Abstzandsringe 4d, 10d, 13d eingesetzt sind.

Die Struktur der einzelnen Elemente der Zange 1 und das System für deren Zusammenbau ermöglicht die Realisierung einer vollständig elektrisch isolierten Zange. Der elektrisch isolierende Kunststoff 2u, welcher beide Schenkel 2, 3 der Zange 1 umhüllt, füllt vorteilhafterweise auch den Zwischenraum zwischen den beiden Metallplatten 2d, 2e; 3d, 3e welche die Backen 2c, 3c bilden aus indem er auch die Erleichterungs-Ausnehmungen welche an diesen Platten vorgesehen sind ausfüllt.

Vorteilhafterweise sind auch die Sitze für die Aufnahme der Schraubelemente 1b, 1c, welche Das Gelenk zwischen den Zankenschenkeln 2, 3 mit Drehachse 1a bilden, von elektrisch isolierendem Werkstoff umhüllt, während die besagten Schraubelemente von Deckeln 1d aus elektrisch isolierendem Kunststoff abgedeckt sind welche durch Druck in eigens dafür an der isolierenden Umhüllung der Schenkel 2, 3 vorgesehenen Sitzen befestigt sind.

Aus Sicherheitsgründen ist auch die Vorschubrolle 10 durch eine Schutzschale 8 geschützt während der Antriebszapfen 9 dieser Rolle von isolierendem Werkstoff umhüllt ist; der innere Teil besteht aus einem Ansatz 9b welcher mit besagter Rolle 10 einstückig ist; der entsprechende Lagerzapfen 10b ist durch die isolierende Hülle 10u abgedeckt. Eine identische oder ähnliche Hülle 10u deckt auch den Lagerzapfen für die Klinge 4e ab, an dieser Hülle ist eine Schutzschale 6a angebracht. An den freien Enden der Backen 2c, 3c der Zange 1 sind Klingen 17 angebracht welche geeignet sind, zwecks Erleichterung des Abziehens des geschnittenen Abdeckmantels G, diesen zu erfassen und/oder durchzuzwicken; besagte Klingen 17 können so befestigt sein, dass keine elektrische Verbindung zu den entsprechenden Schenkeln 2, 3 besteht. Erfindungsgemäß kann die Vorschubrolle 10 auch aus Kunststoff oder aus Keramik gefertigt sein.

## Patentansprüche

1. Abmantelungszange für Elektrokabel oder dergleichen welche aus zwei, gelenkig (1 a) verbundenen Schenkeln (2, 3) besteht welche an einer Seite zwei Griffteile (2a, 3a) und an der anderen Seite zwei Backen (2c, 3c) bilden welche an den freien Enden mit Klingen (17) zum Ergreifen und/oder Durchtrennen aufweisen, an einer Seite mit Kreisklingen (4) für die Durchführung von Rundschnitten am Kabelmantel (G), an der gegenüberliegenden Seite mit mindestens einer Kreisklinge (4e) für die Durchführung von Längsschnitten am selben Kabelmantel (G) und mit einem drehbar gelagertem Auflageelement für den Kabel versehen sind, **dadurch gekennzeichnet, dass** dieses Auflageelement die Form einer Rolle (10) mit zwei gezahnten Kegelstumpfen aufweist welche mit ihrer kleineren Grundfläche zueinander gerichtet sind, dass die Rolle (10) mittels Hebel, Griff, Schlüssel (12) drehbar (9a) angetrieben wird und dass zwischen diesen Antriebselementen und der Rolle (10) ein Ratschenmechanismus vorgesehen sein kann.

2. Abmantelungszange gemäß Anspruch 1, **dadurch gekennzeichnet, dass** die Achse der Lagerzapfen (10b, 4g) für die Vorschubrolle (10), bzw. für die Kreisklinge (4e) für die Durchführung des Längsschnittes, zueinander parallel angeordnet sind und mit der Ebene welche die Längsachse (1x) der Zange (1) und beide Backen (2c, 3c) enthält einen Winkel (α) bildet welcher größer als 90° ist um besagte Kreisklinge (4e) und die Vorschubrolle (10) möglichst nahe an der seitlichen Fläche der Backen (2c, 3c) lagern zu können und an den entsprechenden Griffteilen (2a, 3a) den erforderlichen Freiraum für deren Betätigung sichern zu können.

3. Abmantelungszange gemäß Anspruch 1, **dadurch gekennzeichnet, dass** die Backen (2c, 3c) einen Aufbau mit unter sich parallelen Platten (2d, 2e) aufweisen welche unter sich beabstandet befestigt sind und von denen eine mit dem entsprechenden Schenkel und Griff (2a) einstückig ist und dass der Zwischenraum zwischen den Platten (2d, 3d) mit Kunststoff ausgefüllt ist welcher auch eventuelle Ausnehmungen zur Erleichterung der Platten ausfüllt.

4. Abmantelungszange gemäß Ansprüche 1 und 3, **dadurch gekennzeichnet, dass** die parallelen Platten (2d, 2e) welche den Aufbau der Backen (2c, 3c) bilden, unter sich mittels Schrauben (13, 14), mittels Nieten oder mittels anderer Verbindungselemente welche mit einer oder mit beiden der Platten (2d, 3e) einstückig sind, unter Zwischenlage von Abstandsringen (4d, 10d, 13d), verbunden sind.

5. Abmantelungszange gemäß Anspruch 1, **dadurch gekennzeichnet, dass** die Kreisklingen (4, 4e) mit einer mittigen, einstückigen oder an den Kreisklingen (4, 4e) angebrachten, Büchse (4z) versehen sind und dass diese Klingen vorzugsweise in der Mitte der axialen Erstreckung der Büchse (4z) positioniert sind.

6. Abmantelungszange gemäß den Ansprüchen 1 und 5, **dadurch gekennzeichnet, dass** außen an den Abschnitten der Büchse (4z) welche links und rechts der Kreisklingen (4, 4e) vorstehen, Ringe (5) angebracht werden können deren Außendurchmesser so bemessen ist, dass die Differenz zwischen diesem Außendurchmesser und dem Durchmesser der Klingen (4, 4e) geteilt durch zwei, der Stärke des zu schneidenden Kabelmantels (G) entspricht.

7. Abmantelungszange gemäß den Ansprüchen 1, 5, 6, **dadurch gekennzeichnet, dass** die Kreisklingen (4, 4e) mit Schutzschalen (6) ausgestattet sind welche um die Achsen der entsprechenden Lagerzapfen (4b, 4c) schwenken und dass diese Schutzschalen (6), zusammen mit den Klingen (4, 4e) und den entsprechenden Ringen (5), an den Lagerzapfen (4b, 4c) durch Schrauben (7) zurückgehalten werden welche stirnseitig in diese Lagerzapfen eingeschraubt sind.

8. Abmantelungszange gemäß den Ansprüchen 1 und 5, **dadurch gekennzeichnet, dass** zwischen der Hülse (4z) der Klingen (4, 4e) und den entsprechenden Lagerzapfen (4b, 4g) Hülsen aus elektrisch isolierendem Material eingesetzt sind und dass eine Hülse aus dem selben Werkstoff auch zwischen die Vorschubrolle (10) und dem entsprechenden Lagerzapfen (10b) eingesetzt sein kann.

9. Abmantelungszange gemäß Anspruch 1, **dadurch gekennzeichnet, dass** die Vorschubrolle (10) mit einer Schutzschale (8) ausgestattet ist welche um die Achse (10a) des selben Lagerzapfens (10b) der Vorschubrolle (10) schwenken kann.

10. Abmantelungszange gemäß Anspruch 1, **dadurch gekennzeichnet, dass** beide Schenkel (2, 3) vollständig mit Kunststoff (2u) umhüllt sind welcher auch die Sitze für die Aufnahme der Schraubelemente (1 b, 1 c) welche das Gelenk zwischen den Backen (2, 3) bilden auskleiden und dass diese Schraubelemente von Deckeln (1 d) aus elektrisch isolierendem Werkstoff abgedeckt sind welche durch Druck oder Schnappverschluß an Sitzen welche an der, die Schenkel (2, 3) umhüllende, Schicht vorgesehen sind, angebracht sind.

11. Abmantelungszange gemäß Anspruch 1, **dadurch gekennzeichnet, dass** die Einstellung der Schnitttiefe mittels ausgeformter Auflagen erfolgt welche, in Bezug auf die Achse (a) des zu bearbeitenden Kabels, stufenlos verstellbar sind und den einzelnen Kreisklingen (4, 4e) entsprechend oder zwischen zwei von diesen vorgesehen sind.

12. Abmantelungszange gemäß Anspruch 1, **dadurch gekennzeichnet, dass** die Vorschubrolle (10) und/oder der entsprechende Ansatz (9, 9b) für dessen Antrieb aus elektrisch isolierndem Werkstoff wie z.B. Kunststoff oder Keramik sind.

## Claims

1. Stripping pliers for electrical cables or the like, which consist of two limbs (2, 3) which are connected in an articulated manner (1a) and form two handle parts (2a, 3a) at one end and two jaws (2c, 3c) at the other end, the said jaws being provided with blades (17) for grasping and/or severing at the free ends, being provided with circular blades (4) for making round cuts on the cable sheath (G) on one side, being provided with at least one circular blade (4e) for making longitudinal cuts on the same cable sheath (G) on the opposite side, and being provided with a rotatably mounted support element for the cable, **characterized in that** this support element is in the form of a roller (10) with two toothed truncated cones which are directed towards one another by way of their smaller base surface, **in that** the roller (10) is driven in a rotatable manner (9a) by means of levers, handles, spanners (12), and **in that** a ratchet mechanism can be provided between these drive elements and the roller (10).

2. Stripping pliers according to Claim 1, **characterized in that** the axes of the bearing pins (10b, 4g) for the feed roller (10) and for the circular blade (4e) for making the longitudinal cut are arranged parallel to one another and form an angle (α) with the plane which contains the longitudinal axis (1x) of the pliers (1) and the two jaws (2c, 3c), the said angle being greater than 90° in order to be able to mount the said circular blade (4e) and the feed roller (10) as close as possible to the side face of the jaws (2c, 3c) and to be able to ensure the required free space at the corresponding handle parts (2a, 3a) for operation of the said handle parts.

3. Stripping pliers according to Claim 1, **characterized in that** the jaws (2c, 3c) have a body with parallel plates (2d, 2e) which are fixed at a distance from one another and of which one is integrally formed with the corresponding limb and handle (2a), and **in that** the intermediate space between the plates (2d, 3d) is filled with plastic which also possibly fills recesses for making the plates lighter.

4. Stripping pliers according to Claims 1 and 3, **characterized in that** the parallel plates (2d, 2e) which form the body of the jaws (2c, 3c) are connected to one another by means of screws (13, 14), by means of rivets or by means of other connecting elements, which are integrally formed with one or with both of the plates (2d, 3e), with the interposition of spacer rings (4d, 10d, 13d).

5. Stripping pliers according to Claim 1, **characterized in that** the circular blades (4, 4e) are provided with a central bushing, an integral bushing or a bushing (4z) which is fitted to the circular blades (4, 4e), and **in that** these blades are preferably positioned in the centre of the axial extent of the bushing (4z).

6. Stripping pliers according to Claims 1 and 5, **characterized in that** rings (5) can be fitted to the outside of the sections of bushing (4z) which project from the left and right of the circular blades (4, 4e), the outside diameter of the said rings being of such a size that the difference between this outside diameter and the diameter of the blades (4, 4e) divided by two corresponds to the thickness of the cable sheath (G) which is to be cut.

7. Stripping pliers according to Claims 1, 5 and 6, **characterized in that** the circular blades (4, 4e) are equipped with protective shells (6) which pivot about the axes of the corresponding bearing pins (4b, 4c), and **in that** these protective shells (6), together with the blades (4, 4e) and the corresponding rings (5), are retained on the bearing pins (4b, 4c) by screws (7) which are screwed into the ends of these bearing pins.

8. Stripping pliers according to Claims 1 and 5, **characterized in that** sleeves which are composed of electrically insulated material are inserted between the sleeve (4z) of the blades (4, 4e) and the corresponding bearing pins (4b, 4g), and **in that** a sleeve comprising the same material can also be inserted between the feed roller (10) and the corresponding bearing pin (10b).

9. Stripping pliers according to Claim 1, **characterized in that** the feed roller (10) is equipped with a protective shell (8) which can pivot about the axis (10a) of the same bearing pin (10b) of the feed roller (10).

10. Stripping pliers according to Claim 1, **characterized in that** both limbs (2, 3) are completely encased in plastic (2u) which also lines the seats for receiving the screw elements (1b, 1c) which form the joint between the jaws (2, 3), and **in that** these screw elements are covered by covers (1d) which are composed of electrically insulating material and are fitted to seats, which are provided on the layer which encases the limbs (2, 3), by pressure or a snap-action closure.

11. Stripping pliers according to Claim 1, **characterized in that** the cutting depth is set by means of shaped supports which are infinitely adjustable in relation to the axis (a) of the cable to be machined and are provided in accordance with the individual circular blades (4, 4e) or between two of these circular blades.

12. Stripping pliers according to Claim 1, **characterized in that** the feed roller (10) and/or the corresponding projection (9, 9b) for driving the said feed roller are composed of electrically insulating material, for example plastic or ceramic.

## Revendications

1. Pince à dénuder pour câbles électriques ou similaires, laquelle est composée de deux branches (2, 3) reliées de manière articulée (1a), lesquelles forment deux parties de poignée (2a, 3a), au niveau d'un côté, et deux mâchoires (2c, 3c), au niveau de l'autre côté, lesquelles présentent, au niveau des extrémités libres, des lames (17) pour saisir et/ou sectionner, sont pourvues au niveau d'un côté, de lames circulaires (4) pour l'exécution de coupes circulaires au niveau de l'enveloppe de câble (G), au niveau du côté opposé, d'au moins une lame circulaire (4e) pour l'exécution de coupes longitudinales au niveau de la même enveloppe de câble (G), et d'un élément d'appui, placé tournant, pour le câble, **caractérisée en ce que** cet élément d'appui présente la forme d'une molette (10) avec deux troncs de cône dentés, lesquels sont alignés l'un par rapport à l'autre avec leur surface de base plus petite, **en ce que** la molette (10) est entraînée, de manière tournante (9a), à l'aide de levier, pince, clé (12), et **en ce qu'**entre ces éléments d'entraînement et la molette (10), il peut être prévu un mécanisme à cliquet.

2. Pince à dénuder selon la revendication 1, **caractérisée en ce que** l'axe des tourillons (10b, 4g) pour la molette d'avancement (10) ou pour la lame circulaire (4e) pour exécuter la coupe longitudinale, est disposé parallèlement l'un à l'autre et, forme avec le plan contenant l'axe longitudinal (1x) de la pince (1) et les deux mâchoires (2c, 3c) un angle (α) lequel est supérieur à 90° afin de pouvoir loger ladite lame circulaire (4e) et la molette d'avancement (10) le plus près possible au niveau de la surface latérale des mâchoires (2c, 3c) et de pouvoir garantir, au niveau des parties de poignée (2a, 3a) correspondantes, l'espace libre nécessaire pour leur actionnement.

3. Pince à dénuder selon la revendication 1, **caractérisée en ce que** les mâchoires (2c, 3c) présentent un montage avec des plaques (2d, 2e) parallèles entre elles, lesquelles sont fixées espacées entre elles, et dont une est d'un seul tenant avec la branche correspondante et la poignée (2a) et **en ce que** l'espace intermédiaire entre les plaques (2d, 3d) est comblé avec de la matière plastique laquelle remplit, aussi, d'éventuels évidements pour alléger les plaques.

4. Pince à dénuder selon les revendications 1 et 3, **caractérisée en ce que** les plaques parallèles (2d, 2e), lesquelles forment le montage des mâchoires (2c, 3c), sont reliées entre elles au moyen de vis (13, 14), au moyen de rivets ou au moyen d'autres éléments d'assemblage lesquels sont d'un seul tenant avec une ou avec deux des plaques (2d, 3e), en intercalant des bagues d'espacement (4d, 10d, 13d).

5. Pince à dénuder selon la revendication 1, **caractérisée en ce que** les lames circulaires (4, 4e) sont munies d'une douille (4z) centrale, d'un seul tenant ou placée au niveau des lames circulaires (4, 4e), et **en ce que** ces larmes sont positionnées de préférence au milieu de l'extension axiale de la douille (4z).

6. Pince à dénuder selon les revendications 1 et 5, **caractérisée en ce qu'**à l'extérieur, au niveau des sections de la douille (4z), lesquelles dépassent à gauche et à droite des lames circulaires (4, 4e), des bagues (5) peuvent être placées dont le diamètre extérieur est mesuré de sorte que la différence entre ce diamètre extérieur et le diamètre des lames (4, 4e) divisée par deux, corresponde à l'épaisseur de l'enveloppe de câble (G) à couper.

7. Pince à dénuder selon les revendications 1, 5, 6, **caractérisée en ce que** les lames circulaires (4, 4e) sont munies de coques de protection (6) lesquelles tournent autour des axes des tourillons (4b, 4c) correspondants et **en ce que** ces coques de protection (6) sont tenues, avec les lames (4, 4e) et les bagues (5) correspondantes, au niveau des tourillons (4b, 4c), par des vis (7), lesquelles sont vissées côté face dans ces tourillons.

8. Pince à dénuder selon les revendications 1 et 5, **caractérisée en ce qu'**entre la douille (4z) des lames (4, 4e) et les tourillons (4b, 4g) correspondants, des douilles en matériau isolant électrique sont mises en place et **en ce qu'**une douille du même matériau peut également être mise en place entre la molette d'avancement (10) et le tourillon (10b) correspondant.

9. Pince à dénuder selon la revendication 1, **caractérisée en ce que** la molette d'avancement (10) est munie d'une coque de protection (8), laquelle peut tourner autour de l'axe (10a) du même tourillon (10b) de la molette d'avancement (10).

10. Pince à dénuder selon la revendication 1, **caractérisée en ce que** les deux branches (2, 3) sont entièrement enveloppées de matière plastique (2u) laquelle revêt aussi l'emplacement pour le logement des éléments de vis (1b, 1c) qui forment l'articulation entre les mâchoires (2, 3), et **en ce que** ces éléments de vis sont recouverts de protections (1d) en matériau isolant électrique, lesquelles sont mises en place par pression ou fermeture encliquetée au niveau des emplacements qui sont prévus au niveau de la couche entourant les branches (2, 3).

11. Pince à dénuder selon la revendication 1, **caractérisée en ce que** le réglage de la profondeur de coupe s'effectue au moyen d'appuis façonnés, lesquels peuvent être réglés en continu par rapport à l'axe (a) du câble à travailler et prévus en rapport avec les lames circulaires (4, 4e) individuelles ou entre deux de celles-ci.

12. Pince à dénuder selon la revendication 1, **caractérisée en ce que** la molette d'avancement (10) et/ou le téton d'entraînement (9, 9b) correspondant pour son entraînement est/sont en matériau isolant électrique, comme, par exemple, de la matière plastique ou de la céramique.
